# EUROPEAN PATENT APPLICATION

(11) **EP 2 151 696 A1**
(43) Date of publication of application: **10.02.2010**
(21) Application number: 08161602.1
(22) Date of filing: 31.07.2008
(51) Int. Cl.: G01S 5/00, G01S 5/02, G01S 5/18, H04L 12/56

(54) **Improved room separation in a WLAN based RTLS and method therefore**

(71) Applicant: Aeroscout, Ltd., 76702 Rehovot (IL)
(72) Inventor: Shamir, Adi, 76656 Kidron (IL); Aljadeff, Daniel, 55550 Kiryat Ono (IL); Amsalem, Reuven, 74027 Nes-Ziona (IL)
(74) Representative: Betten & Resch

(57) **Abstract**

A wireless location system for tracking and locating a wireless tag in a structure having defined areas that provides for differentiation between the defined areas has at least one ultrasonic transmitter positioned in each of the defined areas for transmitting an ultrasonic signal having area identification and/or transmitter ID information. A plurality of wireless tags are provided wherein each wireless tag transmits a last area identifying and/or transmitter ID information received and accepted by the wireless tag in a tag message. A plurality of location receivers is installed in the structure for receiving the tag message and for reporting the received message from the tag along with optional measured parameters to a common server. The common server determines the location of each wireless tags in the structure using the defined area or transmitter ID as reported by each wireless tag.

## Description

### FIELD OF THE INVENTION

This invention relates generally to a Wireless Local Area Network (WLAN) and, more specifically, to a WLAN location system which provides the real time location of an asset as well as the exact room in which the asset is located at a given time with high reliability and accuracy.

### BACKGROUND OF THE INVENTION

In many sites where a real time location system is installed, it is important not only to know the real time location of an asset but also the exact room number in which it is located at a given time with high reliability, This is specifically required in large building floor areas that are divided into many small rooms such as in hospital buildings.

A typical WLAN based Real Time Location System (RTLS) utilizes radio wave signals in order to calculate the device location. This is typically done RSSI (remote signal strength indication) or TOA (time of arrival) measurements of a radio signal that is transmitted by the tag. The signal is received by several location receivers or access points that are in different positions, and special geometrical and mathematical algorithms are implemented to calculate the device's location. Further elaboration of these systems and methods can be found in the above mentioned patent application.

Even though such systems today can reach high location accuracies (below 1-2m), present systems have problems with providing the best solution for knowing the exact room location/number. This characteristic, will be referred to as "room separation". Therefore, an asset that is located in one room can appear by mistake on the other side of a wall, i.e. in the adjacent room. This happens due to the fact that radio signals can penetrate through walls and the system sometime is not "sensitive" to the existence of a wall.

The main challenges with respect to room separation are as follows: (1). Provide almost 100% room separation, tell the user the exact room location of an asset with very low probability of locating the asset in a wrong room, (2) Maintain the location capabilities and other advantages of the WLAN based real time location system, such as outdoor location, telemetry etc, and (3) Obtain the above with minimal additional cost per room.

A typical solution to "room separation" issues would be to use low frequency radio communication: A low frequency transmitter (sometime referred to as Exciter) is periodically transmitting a beacon signal which includes the room number information. The tag is triggered by the low frequency transmission, wakes up and transmits a WLAN message that reports the Exciter ID and-or room number to the system, The Exciter is positioned at the entrance to a room, so that it triggers every tag that gets into the room. In other scenarios, the Exciter is located on a wall inside a room, and tuned so that its radiation will be received in almost every position inside the room and only in the room. Further elaboration of these systems and methods can be found in the above mentioned patent application.

The above system solves the requirement #2, as it is fully integrated with the WLAN RTLS. However, it completely does not satisfy the requirement #3 - it is difficult to obtain a relatively low cost solution per room due to the cost of an Exciter. Furthermore, it does not always provide 100% room separation (Requirement #1) since: (a) it is sometimes very difficult to tune the Exciter to be received at each point in the room and only in one room; and (b) it is difficult to differentiate between entrance and exit events to a room, which complicates the overall system solution

Using ultrasonic waves is another way to provide room separation, since they expand freely in empty space, but do not penetrate through walls. Existing real time location systems that utilize ultrasonic waves, include a transmitter in the tag and one or more ultrasonic receivers connected in a network and are attached to the walls or ceiling inside a room. The tag constantly transmits an ultrasonic signal and the receivers report the signal level and/or tag ID to the network, which identifies the room in which the tag transmits. Since the ultrasonic signals transmitted by the tag are received only by those receivers that are in the same room with it, it is rather easy to determine the exact room. Determining the exact location in a room is also possible but rather more difficult.

This system solves the Requirement #1, as it provides a good method to obtain almost perfect room separation. However, the ultrasonic wave system is an independent system which requires its own unique infrastructure, and hence it does not satisfy Requirement #2, and does not include all the benefits a user obtains from using his standard WLAN infrastructure for the location system, It further does not satisfy Requirement #3 as it requires a unique infrastructure in addition to a WLAN infrastructure, which increases the total cost of the solution. In each room, a few receivers need to exist hence the total cost per room is also relatively high.

Therefore, a need existed to provide a system and method to overcome the above problem. The system and method allows for performing room separation using ultrasonic signals, as well as WLAN based location and services, The architectural way in which the two technologies are combined and integrated together enables answering all of the requirements for room separation mentioned above in a very efficient way.

### SUMMARY OF THE INVENTION

In accordance with one embodiment of the present invention, a wireless location system is disclosed. The wireless location system is used for tracking and locating a wireless tag in a structure having defined areas that provides for differentiation between the defined areas. The wireless location system has at least one ultrasonic transmitter positioned in each of the defined areas for transmitting an ultrasonic signal having area identification and/or transmitter ID information. A plurality of wireless tags are provided wherein each wireless tag transmits the last area identifying information or the last transmitter ID received and accepted by the wireless tag in a tag message. A plurality of location receivers and/or WLAN Access Points is installed in the structure for receiving the tag message and for reporting the received message from the tag along with optional measured parameters to a common server. The server determines the location of each wireless tags in the structure also using the defined area or transmitter ID as reported by each wireless tag.

In accordance with another embodiment of the present invention a method for tracking and locating wireless tags in defined areas of a structure and that provides for differentiation between the defined areas is disclosed, The method comprises: providing location receivers and/or WLAN Access Points installed in the structure to locate wireless tags; installing at least one ultrasonic transmitter in each individual defined area; transmitting an ultrasonic signal by each of the at least one ultrasonic transmitter in each individual defined area, each ultrasonic signal confined to the individual defined area where transmitted, the ultrasonic signal having area identifying information and/or transmitter ID; receiving the ultrasonic signal having the area identifying information and/or transmitter ID by a wireless tag in coverage range of the at least one ultrasonic transmitter in the individual defined area; and transmitting a tag message by the wireless tag in coverage range, the tag message including a last identifying information (area identification and/or transmitter ID) received and accepted by the wireless tag and a wireless tag identification data.

In accordance with another embodiment of the present invention, a wireless tag is disclosed. The wireless tag has an ultrasonic receiver module for receiving an ultrasonic signal having area identification and/or transmitter ID information. A transmitter is provided for transmitting the area identification and/or transmitter ID information received and accepted by the wireless tag and an identification number of the wireless tag. A memory is provided for storing at least the identification numbers (area and/or transmitter ID), A micro processor is coupled to the memory, the ultrasonic receiver module, and the transmitter. A power supply is provided for supplying power to circuitry of the wireless tag.

The present invention is best understood by reference to the following detailed description when read in conjunction with the accompanying drawings.

### BRIEF DESCRIPTION OF THE DRAWINGS

Figure 1 is a map having the system of the present invention;

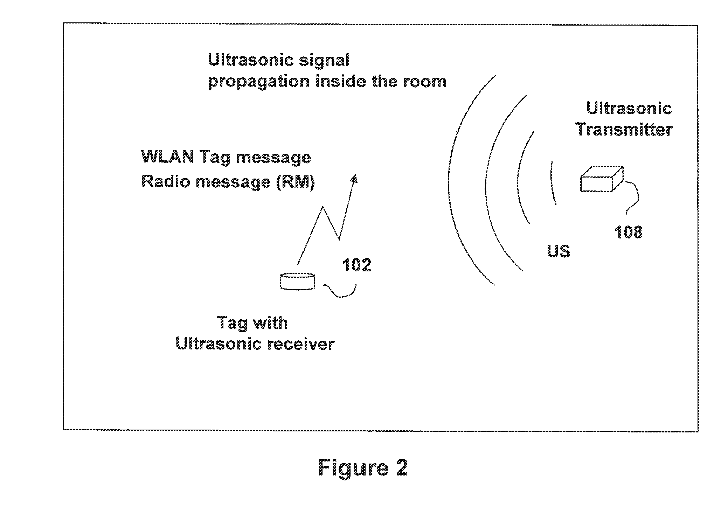

Figure 2 is a simplified block diagram showing the system of Figure 1;

Figure 3 is a simplified block diagram of a wireless tag used in the present invention; and

Figure 4 is a simplified block diagram of an ultrasonic transmitter used in the present invention.

Common reference numerals are used throughout the drawings and detailed descriptions to indicate like elements,

### DETAILED DESCRIPTION

Referring to the Figures, one embodiment of a wireless network **100** of the present invention will be disclosed. The network **100** is a wireless location system which provides the real time location of an asset as well as the exact room in which the asset is located at a given time with high reliability and accuracy.

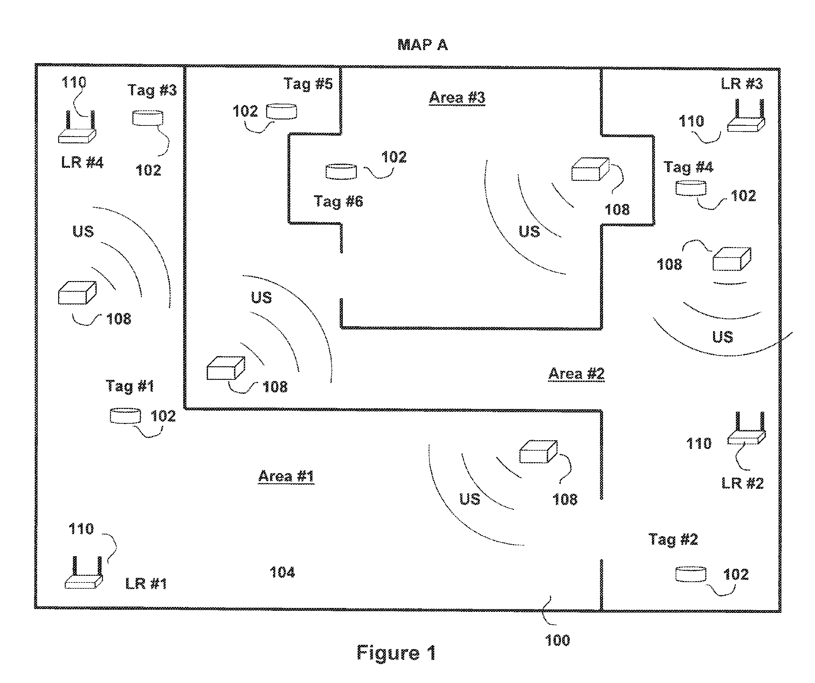

The network **100** uses a standard wireless tag **102.** In Figure 1, six different tags **102** are shown. However, this is only shown as an example and should not limit the scope of the present invention. In accordance with one embodiment, the tag **102** is a WLAN based tag. However, the present invention can be implemented in tags **102** as well as in any standard wireless client operating in such networks. For the sake of simplicity, any reference to tags **102** in the application, applies also to WLAN mobile units or WLAN standard clients and vice versa.

The tag **102** is used in a wireless location system **104.** The wireless location system may be a WLAN based location system or the like. Other types of wireless location systems may be used without departing from the spirit and scope of the present invention. The description below will be drawn towards a WLAN based system, However, this should not be seen as to limit the scope of the present invention. As shown in Figure 1, the wireless location system **104** uses a plurality of location receivers and/or Access Points **110** located throughout Map A and able to receive messages transmitted by the tags **102**, As stated above, however, room differentiation is a problem. The location of each tag **100** is calculated by a server (not shown in Figure 1) connected to those location receivers and/or Access Points **102** based on the information reported by these location receivers and/or Access Points **102** for each of the tags **100.** As previously mentioned, when this location is calculated only based on parameters measured on RF radio signals, there is some probability that it will be in the wrong room.

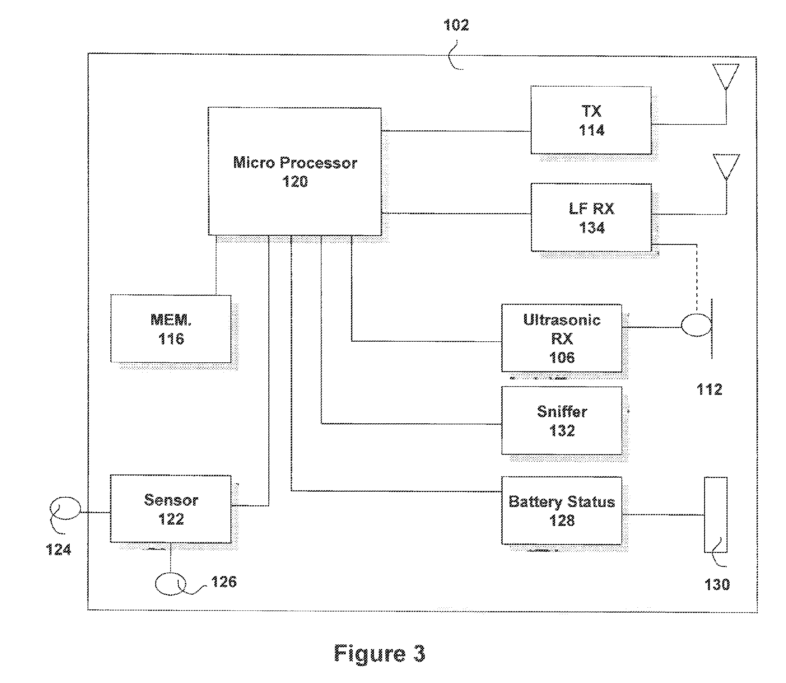

To overcome the issue of room differentiation, each tag **102** is integrated with an ultrasonic receiver module **106** (See Figure 3), Once triggered by an ultrasonic signal (US) transmitted by an US transmitter **108** which includes a room and/or transmitter ID number, the tag **102** transmits a WLAN radio message (RM) to the network **100** which includes the room and/or transmitter ID and associates the specific tag **102** with a specific room.

According to one embodiment of the present invention, one or more ultrasonic based transmitters **108** are located inside the room and periodically transmit a ultrasonic signal (US) which includes the room ID (i.e. Area #1, Area #2, etc.) or any other identification information (e.g. transmitter ID), Due to the non penetrating nature of ultrasonic signals (US), the tag **102** will be triggered only by the ultrasonic signal (US) of transmitters **108** that are located inside the room in which the tag **102** is located. The ultrasonic signals (US) cannot penetrate through the room walls and hence tags **102** located outside the room will not be triggered. Due to the propagation nature of ultrasonic signals (US) inside an enclosure, they will be received by the tag **102** in any position or angle inside the room. It should be noted that in Figure 1, doors will generally be used in the etitry/exit areas of the room to prevent the ultrasonic signals (US) from triggering tags **102** on an opposite side of the entry/exit area of the room. Thus, tag #2 in Area 2 of Figure 1 will not receive the ultrasonic signals (US) transmitted by transmitters **108** in Area #1.

The tag **102** can measure the TOA (time of arrival) of several US signals received by the tag **102** and the information can be used by the location server to perform a precise location using TDOA (Time Difference Of Arrival). Measuring the ultrasonic signal TOA and the LF signal TOA with an accuracy of +/- 1msec, both signals transmitted from a single transmitter also makes it possible to calculate the distance of the tag **102** from the transmitter **108.**

One key benefit of the network **100** is that the network **100** utilizes the backbone WLAN connectivity of the tag **102** in order to transmit the room and/or transmitter ID and tag ID. Thus, the network **100** does not require any additional network connectivity or new network infrastructure from the ultrasonic units.

In another embodiment of the network **100,** it is possible to increase the location accuracy of the WLAN based system **104** and not only provide the information in which room an asset is located. The transmitted ID sent by the transmitters **108** limits the location coordinates of an asset to a defined area (i.e., a defined room area), and therefore the transmitted ID can eliminate location calculation results that results in coordinates that are outside the defined room area of the transmitted ID. In another embodiment, this additional information can be used to avoid detecting an asset in a wrong floor (floor separation) as the room information is a subset of the floor information. In another embodiment of this method, the room and/or transmitter ID information can be used to filter readings of some WLAN locations receivers **110**. This way error factors (such as interference to certain location receivers) can be eliminated and the overall location coordinates calculated by the WLAN system **104** will be more accurate.

Referring now to Figure 3 and in accordance with one embodiment, the tag **102** win include one or more ultrasonic microphones **112**, The ultrasonic microphone **112** is connected to the ultrasonic receiver module **106** that can retrieve data from the received ultrasonic signal (US), The transmitted ID from the ultrasonic signal (US) is sent to a micro processor **120**. The periodic ultrasonic signal (US) in the air will trigger the transmitter **114** which will transmit the relevant information (e.g. Room ID and/or transmitter ID) through the WLAN based location system **104**. Alternatively, the information can be stored in a memory **116** of the tag **102** and transmitted in the next session of the WLAN transmission of the tag **102.** The WLAN transmitted signal is typically transmitted periodically at predetermined intervals and will further include broadcast address, sequence number and other information relevant to the tag including tag ID and telemetry information. The transmitted signal as a minimum includes an identification number associated with the tag **102** that is retrieved from memory **116,** which may also store micro processor **120** instructions and data.

A sensor circuit **122** may be coupled to the signal processor **120** to receive signals from external sensor connector **124** or internal sensor **126** and a battery status monitoring circuit **128** may also be coupled to the signal processor **120** to indicate the strength of the power supply **130**, The battery status circuit **128** and sensor circuit **122** provide information to the signal processor **120** that may be transmitted along with the tag ID to location receivers and/or Access Points **110** in the WLAN based location system **104**.

A sniffer circuit **132** may be included to determine whether or not the WLAN. channel is clear. If the WLAN channel is clear, the transmitted signal is transmitted at the predetermined time, otherwise a back-off algorithm as specified by the particular WLAN specification employed by the WLAN is applied and the signal is transmitted subsequently when the channel is clear. Alternatively, the sniffer circuit **132** may be omitted, in which case the transmitted signal is differentiated from the standard WLAN signals by using a non-standard code sequence or a non-standard preamble.

In another embodiment of the present invention, the tag **102** can utilize an already existing low frequency receiver **134** (such as the one used for the Exciters solution described above) for the purpose of receiving the ultrasonic signals (US), since the low frequency receiver **134** usually operate in the same frequency ranges (40Khz-200Khz). Both the ultrasonic microphone **112** and a low frequency antenna **134A** of the low frequency receiver **134** can be connected in parallel as two antennas to the low frequency receiver **134**, and the tag **102** can include both options.

In accordance with another embodiment of the present invention, the tag **102** can be triggered by a low frequency radio signal that is synchronized with the ultrasonic signal (US) at the transmitter side. In this embodiment, due to the low propagation velocity of ultrasonic waves relative to radio waves, the synchronization can be used to calculate a range between the tag **102** and the transinitter/s **108** by measuring the time delay between the radio and the ultrasonic signals (US). This information can be transmitted through the WLAN based location system **104** and be used for various location purposes such as improved location inside the room. In any case, having the ultrasound receiver side in the tag **102** and not the ultrasound transmitter enables low power consumption which will provide long battery life, as the tag **102** is a very power sensitive device.

In certain embodiments of the system, the tag **102** can have a receiving window in which the low frequency receiver **134** is periodically activated and detects existence of an ultrasound signal. The low frequency receiver **134** can be activated from an idle (power saving mode) or from a complete power down situation. This feature can be used in order to reduce the overall power consumption of the tag **102** and increase its battery life. The importance of this feature is the fact that due to the slow propagation of ultrasonic signals, reception of the message is a power consuming task for the tag **102.**

In another embodiment of the invention, a low frequency Exciter may be located at the entrance/exit of an area that has many rooms and can be used to activate/deactivate the ultrasound receiver **106** (either constantly or to activate/deactivate the periodic receive interval) in the tag **102** as it enters/exits the area. This is used in order to increase the tag's battery life, so that at time periods when it is not located in a section of the site that requires ultrasound area separation, the ultrasound receiver **106** will be deactivated completely. In another embodiment, the Exciter can be used to modify the ultrasound receive interval of the tag rather than just activating/deactivating the ultrasound receiver.

In another embodiment of the invention, the tag **102** can have its own wireless network receiver (a bi-directional tag). In a system that is capable of knowing the tag's location in other means (such as RF based location), the system will send the to tag **102** through its RF receiver a command to activate/deactivate the ultrasound receiver **106** (or the periodic receive window) when it enters/exits an area that requires ultrasound area separation.

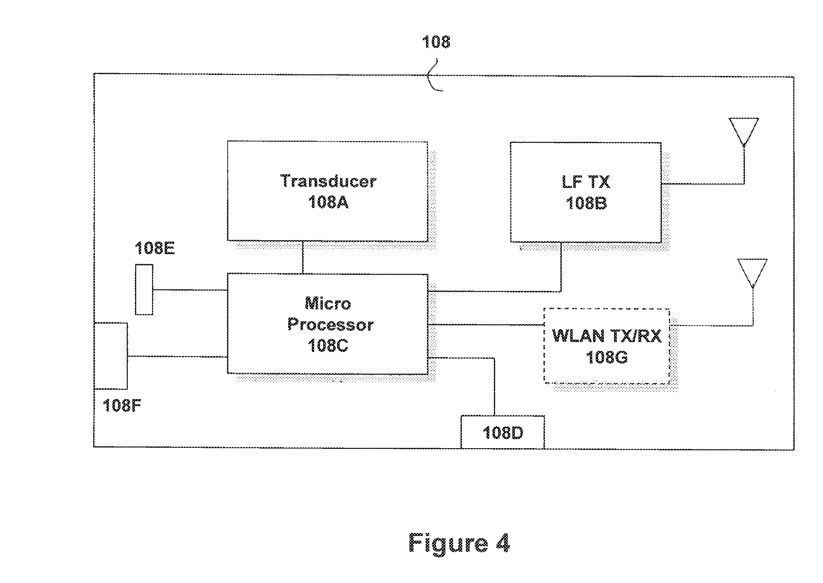

Now referring to Figure 4, the ultrasound transmitter **108** includes an ultrasonic transducer **108A** used to periodically transmit the ultrasonic signal. A micro processor **108C** may be used to determine when the ultrasonic signal (US) is transmitted. The ultrasonic signal (US) includes the room ID or any other identification information (e.g. transmitter ID) in its data payload. In a preferred embodiment, the ultrasound transmitter **108** will include a power supply **108D**. The power supply may be an electricity plug which will enable the transmitter **108** to be mounted on the wall and obtain power for the transmitter operation. Alternatively, the power supply **108D** can operate from a battery or be connected directly to the electricity network like a ceiling lamp. Alternatively, a few transmitters **108** can be installed inside the same room, all transmitting the same data, to ensure coverage for very large enclosures.

The room ID (or any other relevant ID) can be configured to the transmitter **108** manually, (for example, using DIP switches **108E**) or with any other interface such as serial connector **108F** and the like.

In another embodiment of the present invention, the transmitter **108** can be connected to the WLAN based location system **104** for over the network configuration purpose (such as of the room ID or output power) or to a wired network (e,g. Ethernet) for power supply using a PoE (Power over Ethernet) switch. Network configuration (wired or wireless) will enable more flexibility to the user upon installation and maintenance. When using WLAN connection, the microprocessor **108C** in the ultrasound transmitter unit **108** can be connected to the WLAN based location system **104** by integrating into the unit an optional wireless transceiver **108G** thus providing OTA (Over The Air) configuration and control.

In accordance with another embodiment of the transmitter **108,** the transmitter **108** includes integration with a low frequency transmitter **108B** such as the Exciter described above to form an ultrasonic Exciter. This will enable synchronizing the ultrasonic beacon with a low frequency radio beacon, which will enable triggering the tag with low frequency radio, for tags that prefer such triggering due to power consumption reasons.

In this embodiment, the ultrasound Exciter can include more than 1 speaker. In a typical embodiment, there shall be one speaker in front of the box, and up to 4 speakers on each side, all transmit simultaneously or sequentially. Each speaker can be activated or deactivated. The amplitude and phase of each speaker can also be controlled and set to any level between zero and the maximum output available. This feature can be used to increase the flexibility of mounting the ultrasonic Excites in different positions in the room, optimizing its coverage over the entire room volume and reducing its leakage through openings in the room such as doors and windows

In various embodiments of the invention, the transmission frequency of the ultrasonic Exciter can vary between 20KHz to 200KHz. Due to higher propagation losses of the higher frequencies, higher frequencies can be used for more precise location accuracies. In other embodiments, different frequencies can be used to avoid interference for the receiver in the tag 102 (such as interference caused by other near-by US sources). Avoiding interference can be done by changing the frequency dynamically or statically.

In a certain embodiment of the invention, the ultrasound Exciters (or hybrid LF + Ultrasound Exciters) can be daisy-chained together. The chaining can be used to provide larger or optimized coverage of the ultrasound signal in a certain space, by having all Exciters transmit simultaneously (so that the space phase is correlated between them), In another embodiment, the ultrasonic Exciters can be synchronized so that each can transmit at a different time interval. This can be used to avoid air interference between their transmissions with several ultrasonic Exciters in the same room, and create higher resolution area separation in the same room.

In a typical embodiment of the invention, the ultrasound Exciter status will be monitored. This monitoring can be done by mechanisms of self test or by embedding a reduced range ultrasound receiver (such as the one used in the tags) inside the Exciter itself, to detect the transmitted signal. Monitoring indications can be done locally in the Exciter (for example, by switching an LED on) or through a network connection of the Exciter.

In a preferred embodiment of the invention, the US Exciter can be designed in a box that includes a built in AC power outlet on the back of the box, so that it can be mounted and powered by simply plugging it into the socket. This provides a combination of a simple mounting and powering solution

The present invention can also be implemented in any radio based WLAN networks. A preferred embodiment, is a standard Wi-Fi network, but any other WLAN radio infrastructure, whether standard or proprietary can be used for the implementation of the present invention.

The present invention satisfies all 3 requirements for "room separation". In the present invention, very close to 100% room separation is obtained via the introduction of ultrasonic signals into the system. The system is based upon the WLAN real time location system and hence maintains all the advantages of the WLAN location system, including the usage of existing infrastructure, the location accuracy, WLAN based services and the use of telemetry. The total cost per room is low due to the low amount of additional components required for the tag, the low cost and simplicity of the ultrasonic transmitter unit, and the utilization of the existing network infrastructure. The present invention is simple to implement and effective. It provides the above advantages in an implementation that naturally combines into the WLAN location system with minimal additional cost to the existing components, and minimal effect on the lifetime of the tag's battery.

This disclosure provides exemplary embodiments of the present invention. The scope of the present invention is not limited by these exemplary embodiments, Numerous variations, whether explicitly provided for by the specification or implied by the specification, such as variations in structure, dimension, type of material and manufacturing process may be implemented by one skilled in the art in view of this disclosure.

An embodiment of the present invention may be summarized as follows, A wireless location system for tracking and locating a wireless tag in a structure having defined areas that provides for differentiation between the defined areas has at least one ultrasonic transmitter positioned in each of the defined areas for transmitting an ultrasonic signal having area identification and/or transmitter ID information. A plurality of wireless tags are provided wherein each wireless tag transmits a last area identifying and/or transmitter ID information received and accepted by the wireless tag in a tag message. A plurality of location receivers is installed in the structure for receiving the tag message and for reporting the received message from the tag along with optional measured parameters to a common server. The common server determines the location of each wireless tags in the structure using the defined area or transmitter ID as reported by each wireless tag.

## Claims

1. A wireless location system for tracking and locating a wireless tag in a structure having defined areas that provides for differentiation between the defined areas comprising:
at least one ultrasonic transmitter positioned in each of the defined areas for transmitting an ultrasonic signal having data comprising at least one of area identification information or transmitter ID;
a plurality of wireless tags, wherein each wireless tag transmits data comprising at least one of a last area identifying information or transmitter ID received and accepted by the wireless tag in a tag message;
a plurality of location receivers installed in the structure for receiving the tag message and for reporting the received tag message and measured parameters; and
a server for receiving the tag message and measured parameters and for determining a location and defined area of each wireless tag.

2. A wireless location system in accordance with Claim 1 wherein the plurality of location receivers are WLAN access points,

3. A wireless location system in accordance with Claim 1 or 2 wherein the ultrasonic signal triggers each wireless tag to transmit the identifying information in a tag message.

4. A wireless location system in accordance with one of Claims 1 to 3 wherein the area identifying information is stored in each tag and transmitted in a next transmission session of each tag.

5. A wireless location system in accordance with one of Claims I to 4 wherein the at least one ultrasonic transmitter periodically transmits the ultrasonic signal having area identification information.

6. A wireless location system in accordance with one of Claims 1 to 5 wherein the at least one ultrasonic transmitter further transmits a low frequency radio signal that is synchronized with the ultrasonic signal.

7. A wireless location system in accordance with one of Claims 1 to 6 wherein each tag comprises:
an ultrasonic receiver module for receiving the ultrasonic signal having area identification information; and
a transmitter for transmitting the area identifying information received and accepted by the wireless tag.

8. A wireless location system in accordance with Claim 7 wherein each tag further comprises:
a memory for storing at least an identification number of an individual tag;
a microprocessor coupled to the memory, the ultrasonic receiver module, and the transmitter: and
a power supply for supplying power to circuitry of each individual tag.

9. A wireless location system in accordance with Claim 8 wherein each tag further comprises:
a sniffer circuit coupled to the signal processor for determining when a channel is clear for the transmitter to transmits; and
a power status monitor for monitoring a status of the power supply.

10. A wireless location system in accordance with Claim 8 or 9 wherein the ultrasonic receiver module comprises:
an ultrasonic microphone; and
an ultrasonic receiver coupled to the ultrasonic microphone and to the signal processor;

11. A wireless location system in accordance with Claim 10 wherein each tag further comprises a low frequency receiver coupled to the signal processor.

12. A method for tracking and locating wireless tags in defined areas of a structure and that provides for differentiation between the defined areas comprising:
providing location receivers installed in the structure to locate wireless tags;
installing at least one ultrasonic transmitter in each individual defined area;
transmitting an ultrasonic signal by each of the at least one ultrasonic transmitter in each individual defined area, each ultrasonic signal confined to the individual defined area where transmitted, the ultrasonic signal having at least one of area identifying information or transmitter ID;
receiving the ultrasonic signal having at least one of the area identifying information or transmitter ID by a wireless tag in coverage range of the at least one ultrasonic transmitter in the individual defined area; and
transmitting a tag message by the wireless tag in coverage range, the tag message including at least one of a last identifying information or transmitter ID received and accepted by the wireless tag and a wireless tag identification data.

13. The method of Claim 12 wherein the location receivers are WLAN access points.

14. The method of Claim 12 or 13 wherein the ultrasonic signal triggers the wireless tag to transmits the identifying information in the tag message.

15. The method of one of Claims 12 to 14 further comprising:
storing the area identifying information in the wireless tag; and
transmitting the tag message in a next transmission session of the wireless tag.

16. The method of one of Claims 12 to 15 wherein transmitting an ultrasonic signal further comprises transmitting periodically the ultrasonic signal.

17. The method of one of Claims 12 to 16 further transmitting a low frequency radio signal that is synchronized with the ultrasonic signal by the at least one ultrasonic transmitter.

18. A wireless tag comprising:
an ultrasonic receiver module for receiving an ultrasonic signal having at least one of area identification or transmitter ID information;
a transmitter for transmitting the at least one of area identification or transmitter ID information received and accepted by the wireless tag and an identification number of the wireless tag;
a memory for storing at least the identification number;
a microprocessor coupled to the memory, the ultrasonic receiver module, and the transmitter; and
a power supply for supplying power to circuitry of the wireless tag.

19. A wireless tag in accordance with Claim 18 further comprising:
a sniffer circuit coupled to the signal processor for determining when a channel is clear for the transmitter to transmits; and
a power status monitor for monitoring a status of the power supply.

20. A wireless tag in accordance with Claim 18 or 19 wherein the ultrasonic receiver module comprises:
an ultrasonic microphone; and
an ultrasonic receiver coupled to the ultrasonic microphone and to the signal processor.

21. A wireless tag in accordance with Claim 20 wherein each tag further comprises a low frequency receiver coupled to the signal processor.

22. A wireless location system for tracking and locating a wireless tag in a structure having defined areas that provides for differentiation between the defined areas in accordance with one of Claims 1 to 11 wherein each wireless tag can measure a TOA (Time of Arrival) of a plurality of ultrasonic signals received by each tag, the measured TOAs used by the server to calculate a location of each tag using TDOA.

23. A wireless tag in accordance with one of Claims 18 to 21 wherein the ultrasonic receiver module can measure a TOA (Time of Arrival) of a plurality of ultrasonic signals received, the measured TOAs used by a server to calculate a location of the tag using TDOA.

24. A wireless location system for tracking and locating a wireless tag in a structure having defined areas that provides for differentiation between the defined areas in accordance with one of Claims 1 to 11 wherein each wireless tag has a receiving window in which each tag is activated to receive the ultrasonic signals.

25. A wireless tag in accordance with one of Claims 18 to 21 or 23 wherein the ultrasonic receiver module has a receiving window in which the ultrasonic receiver module is activated to receive the ultrasonic signals.

26. A wireless location system for tracking and locating a wireless tag in a structure having defined areas that provides for differentiation between the defined areas in accordance with one of Claims 1 to 11 wherein location receivers in a same predefined area are daisy chained together.
